# EUROPÄISCHE PATENTANMELDUNG

(11) **EP 4 468 425 A2**
(43) Veröffentlichungstag der Anmeldung: **27.11.2024**
(21) Anmeldenummer: 24166129.7
(22) Anmeldetag: 26.03.2024
(51) Int. Cl.: H01M 8/04007, H01M 8/04701, H01M 8/04746

(54) **BRENNSTOFFZELLENABGASANLAGE UND VERFAHREN ZUM BETREIBEN EINES BRENNSTOFFZELLENSYSTEMS**

(30) Priorität: 06.04.2023 DE 102023108806
(71) Anmelder: Purem GmbH, 66539 Neunkirchen (DE)
(72) Erfinder: Gaiser, Gerd, Reutlingen (DE)
(74) Vertreter: Ruttensperger Lachnit Trossin Gomoll

(57) **Zusammenfassung**

Eine Brennstoffzellenabgasanlage, insbesondere zur Bereitstellung elektrischer Energie in einem Fahrzeug, umfasst eine Brennstoffzellenabgas/Umgebungsluft-Mischanordnung (26) zur Aufnahme von von einer Brennstoffzellenanordnung (12) abgegebenem Brennstoffzellenabgas (A_{B}) und von erwärmter Umgebungsluft (U_{E}) und zur Abgabe eines Brennstoffzellenabgas/Umgebungsluft-Gemisches (G) sowieeine Umgebungsluft-Heizanordnung (27) zur Erwärmung der der Brennstoffzellenabgas/Umgebungsluft-Mischanordnung (26) zur Durchmischung mit dem Brennstoffzellenabgas (A_{B}) zuzuführenden Umgebungsluft (U).

## Beschreibung

Die vorliegende Erfindung betrifft eine Brennstoffzellenabgasanlage und ein Verfahren zum Betreiben eines eine Brennstoffzellenanordnung und eine Brennstoffzellenabgasanlage aufweisenden Brennstoffzellensystems.

In einem beispielsweise in einem Fahrzeug zur Erzeugung elektrischer Energie eingesetzten Brennstoffzellensystem entsteht bei der Umsetzung von einem Anodenbereich einer Brennstoffzellenanordnung zugeführtem, Wasserstoff (H₂) enthaltendem Anodengas und einem Kathodenbereich der Brennstoffzellenanordnung zugeführtem, Sauerstoff (O₂) enthaltendem Kathodengas abhängig vom Typ der eingesetzten Brennstoffzellenanordnung ein vergleichsweise stark mit Wasser bzw. Wasserdampf angereichertes Anodenabgas oder/und ein vergleichsweise stark mit Wasser bzw. Wasserdampf angereichertes Kathodenabgas. Wird derartiges stark mit Wasser bzw. Wasserdampf angereichertes, das Anodenabgas oder/und das Kathodenabgas enthaltendes bzw. umfassendes Brennstoffzellenabgas bei vergleichsweise niedriger Umgebungstemperatur zur Umgebung abgegeben, kann beim Kontakt des wasserhaltigen Brennstoffzellenabgases mit der vergleichsweise kalten Umgebungsluft am Austrittsort des Brennstoffzellenabgases durch auskondensierendes Wasser eine intensive Nebelbildung auftreten. Dies ist nicht nur aus optischen Gründen unerwünscht, sondern es besteht die Gefahr, dass durch das bei niedriger Umgebungstemperatur und insbesondere kaltem Untergrund auskondensierende und am Untergrund sich niederschlagende Wasser Eis gebildet wird.

Es ist die Aufgabe der vorliegenden Erfindung, eine Brennstoffzellenabgasanlage und ein Verfahren zum Betreiben eines Brennstoffzellensystems vorzusehen, mit welchen der Gefahr einer Nebelbildung bei der Abgabe von Brennstoffzellenabgas in die Umgebung effektiv entgegengewirkt werden kann.

Gemäß einem ersten Aspekt der vorliegenden Erfindung wird diese Aufgabe gelöst durch eine Brennstoffzellenabgasanlage, insbesondere zur Bereitstellung elektrischer Energie in einem Fahrzeug, umfassend:
- eine Brennstoffzellenabgas/Umgebungsluft-Mischanordnung zur Aufnahme von von einer Brennstoffzellenanordnung abgegebenem Brennstoffzellenabgas und von erwärmter Umgebungsluft und zur Abgabe eines Brennstoffzellenabgas/Umgebungsluft-Gemisches,
- eine Umgebungsluft-Heizanordnung zur Erwärmung der der Brennstoffzellenabgas/Umgebungsluft-Mischanordnung zur Durchmischung mit dem Brennstoffzellenabgas zuzuführenden Umgebungsluft.

Dadurch, dass bei einer erfindungsgemäß aufgebauten Brennstoffzellenabgasanlage dem stark mit Wasser bzw. Wasserdampf angereicherten Brennstoffzellenabgas erwärmte Umgebungsluft beigemischt wird, wird es möglich, vor Abgabe des Brennstoffzellenabgases bzw. des aus dem Brennstoffzellenabgas und der erwärmten Umgebungsluft generierten Gemisches dieses Gemisch mit einer relativen Feuchte von deutlich unter 100% bereitzustellen. Kommt dieses Gemisch mit einer im Vergleich zum Brennstoffzellenabgas deutlich geminderten relativen Feuchte bei der Abgabe aus der Brennstoffzellenabgasanlage in Kontakt mit vergleichsweise kalter Umgebungsluft, ist die Gefahr, dass durch eine spontane Abkühlung des Gemisches die relative Feuchte einen Wert von 100% erreicht bzw. übersteigt und damit eine Nebelbildung auftritt, deutlich gemindert.

Um ohne zusätzlichen Energieeintrag bzw. ohne Verwendung von in einem Brennstoffzellensystem erzeugter elektrischer Energie die mit dem Brennstoffzellenabgas erwärmt zu vermischende Umgebungsluft effizient erwärmen zu können, wird vorgeschlagen, dass die Umgebungsluft-Heizanordnung einen von der Brennstoffzellenabgas/Umgebungsluft-Mischanordnung zuzuführender Umgebungsluft und einem in einem Brennstoffzellen-Kühlkreislauf strömenden Brennstoffzellen-Kühlmedium durchströmbaren Wärmetauscher zur Übertragung von in dem Brennstoffzellen-Kühlmedium enthaltener Wärme auf die der Brennstoffzellenabgas/Umgebungsluft-Mischanordnung zuzuführende Umgebungsluft umfasst.

Zum Regulieren der Temperatur der mit dem Brennstoffzellenabgas erwärmt zu vermischenden Umgebungsluft wird vorgeschlagen, dass der Umgebungsluft-Heizanordnung eine Strömungsdrosselanordnung zur Drosselung der durch die Umgebungsluft-Heizanordnung hindurchströmenden Menge der der Brennstoffzellenabgas/Umgebungsluft-Mischanordnung zuzuführenden Umgebungsluft zugeordnet ist.

Zur Durchmischung des Brennstoffzellenabgases mit der erwärmten Umgebungsluft kann die Brennstoffzellenabgas/Umgebungsluft-Mischanordnung ein die von der Umgebungsluft-Heizanordnung abgegebene Umgebungsluft und das Brennstoffzellenabgas aufnehmendes Mischvolumen umfassen.

Die Durchmischung der erwärmten Umgebungsluft mit dem Brennstoffzellenabgas kann dadurch unterstützt werden, dass dem Mischvolumen eine Brennstoffzellenabgas/Umgebungsluft-Mischanordnung zum Vermischen der in das Mischvolumen eingeleiteten Umgebungsluft mit dem in das Mischvolumen eingeleiteten Brennstoffzellenabgas zugeordnet ist.

Bei einer baulich einfach zu realisierenden Ausgestaltung kann das Mischvolumen eine, also eine einzige, das Brennstoffzellenabgas, also das gesamte mit erwärmter Umgebungsluft zu mischende Brennstoffzellenabgas, und die von der Umgebungsluft-Heizanordnung abgegebene Umgebungsluft, also die gesamte mit dem Brennstoffzellenabgas zu mischende erwärmte Umgebungsluft, aufnehmende Mischkammer umfassen.

Um die Durchmischung von Brennstoffzellenabgas und erwärmter Umgebungsluft in der Mischkammer effizient zu unterstützen, wird vorgeschlagen, dass die Mischkammer eine Mehrzahl von Umgebungsluft-Eintrittsöffnungen zum Einleiten von Umgebungsluft in die Mischkammer oder/und eine Mehrzahl von Brennstoffzellenabgas-Eintrittsöffnungen zum Einleiten von Brennstoffzellenabgas in die Mischkammer umfasst.

Die Umgebungsluft/Brennstoffzellenabgas-Mischanordnung kann in Zuordnung zu der Mischkammer wenigstens einen Mischer umfassen. Dieser kann beispielsweise in der Mischkammer angeordnet sein.

Um die Effizienz der Durchmischung von Brennstoffzellenabgas und erwärmter Umgebungsluft zu steigern, wird vorgeschlagen, dass das Mischvolumen eine Mehrzahl von Mischkammern umfasst, wobei jede Mischkammer zur Aufnahme eines Teils des Brennstoffzellenabgases und eines Teils der von der Umgebungsluft-Heizanordnung abgegebenen Umgebungsluft vorgesehen ist.

Bei derartiger Ausgestaltung mit mehreren Mischkammern kann die Brennstoffzellenabgas/Umgebungsluft-Mischanordnung in Zuordnung zu jeder Mischkammer wenigstens einen Mischer umfassen. Auch bei derartiger Ausgestaltung kann beispielsweise jeweils ein derartiger Mischer in einer jeweiligen Mischkammer angeordnet sein.

Um vor Abgabe des Gemisches aus Brennstoffzellenabgas und Umgebungsluft die relative Luftfeuchte noch weiter zu senken, wird vorgeschlagen, dass eine Umgebungsluft-Beimischanordnung zum Beimischen von Umgebungsluft zu dem von der Brennstoffzellenabgas/Umgebungsluft-Mischanordnung abgegebenen Brennstoffzellenabgas/Umgebungsluft-Gemisch vorgesehen ist.

Zur Behandlung des von einer Brennstoffzellenanordnung abgegebenen Brennstoffzellenabgases kann stromaufwärts der Brennstoffzellenabgas/Umgebungsluft-Mischanordnung eine Brennstoffzellenabgas-Behandlungsanordnung vorgesehen sein. Die Brennstoffzellenabgas-Behandlungsanordnung kann wenigstens eine der folgenden Baugruppen umfassen:
- Flüssigkeitsabscheider,
- Katalysator,
- Schalldämpfer.

Die Erfindung betrifft ferner ein Brennstoffzellensystem, umfassend eine Brennstoffzellenanordnung und eine erfindungsgemäß aufgebaute Brennstoffzellenabgasanlage, welche das von der Brennstoffzellenanordnung abgegebene Anodenabgas oder/und Kathodenabgas als Brennstoffzellenabgas aufnimmt und mit im Vergleich zu dem aufgenommenen Brennstoffzellenabgas verminderter relativer Feuchte zur Umgebung abgibt.

Die Erfindung betrifft ferner ein Verfahren zum Betreiben eines Brennstoffzellensystems, beispielsweise eines Brennstoffzellensystems mit dem erfindungsgemäßen Aufbau, bei welchem Verfahren ein Gemisch aus von einer Brennstoffzellenanordnung des Brennstoffzellensystems abgegebenem Brennstoffzellenabgas und Umgebungsluft erzeugt wird, wobei wenigstens ein Teil der dem Brennstoffzellenabgas beigemischten Umgebungsluft vor Vermischung mit dem Brennstoffzellenabgas erwärmt wird.

Nachdem durch das Beimengen erwärmter Umgebungsluft zu dem aus einer Brennstoffzellenanordnung abgegebenen Brennstoffzellenabgas die relative Feuchte des damit erzeugten Gemisches im Vergleich zu der relativen Feuchte des aus der Brennstoffzellenanordnung abgegebenen Brennstoffzellenabgases bereits deutlich gesenkt worden ist, kann eine weitere Absenkung der relativen Feuchte dadurch erreicht werden, dass dem Gemisch aus Brennstoffzellenabgas und erwärmter Umgebungsluft nicht erwärmte Umgebungsluft beigemischt wird.

Für eine effiziente und energiesparende Bereitstellung des Gemisches aus Brennstoffzellenabgas und erwärmter Umgebungsluft wird vorgeschlagen, dass die erwärmt mit dem Brennstoffzellenabgas zu mischende Umgebungsluft in einem Wärmetauscher durch thermische Wechselwirkung mit einem in einem Brennstoffzellen-Kühlkreislauf strömenden Brennstoffzellen-Kühlmedium erwärmt wird.

Um auch abhängig von den Umgebungsbedingungen, insbesondere der Umgebungstemperatur, die Absenkung der relativen Luftfeuchte in einem erforderlichen Ausmaß erreichen bzw. einstellen zu können, kann zur Einstellung einer Temperatur der in dem Wärmetauscher zu erwärmenden Umgebungsluft ein Massenstrom der den Wärmetauscher durchströmenden Umgebungsluft oder/und ein Massenstrom des den Wärmetauscher durchströmenden Brennstoffzellen-Kühlmediums verändert werden.

Zum Bereitstellen des Gemisches aus erwärmter Umgebungsluft und Brennstoffzellenabgas kann das Brennstoffzellenabgas mit der erwärmten Umgebungsluft in wenigstens einer wenigstens einen Teil des Brennstoffzellenabgases und wenigstens einen Teil der erwärmten Umgebungsluft aufnehmenden Mischkammer gemischt werden.

Die vorliegende Erfindung wird nachfolgend mit Bezug auf die beiliegenden Figuren detailliert beschrieben. Es zeigt:
- Fig. 1: in prinzipieller Darstellung ein Brennstoffzellensystem;
- Fig. 2: eine alternative Ausgestaltung einer Brennstoffzellenabgas/Umgebungsluft-Mischanordnung des Brennstoffzellensystems der Fig. 1.

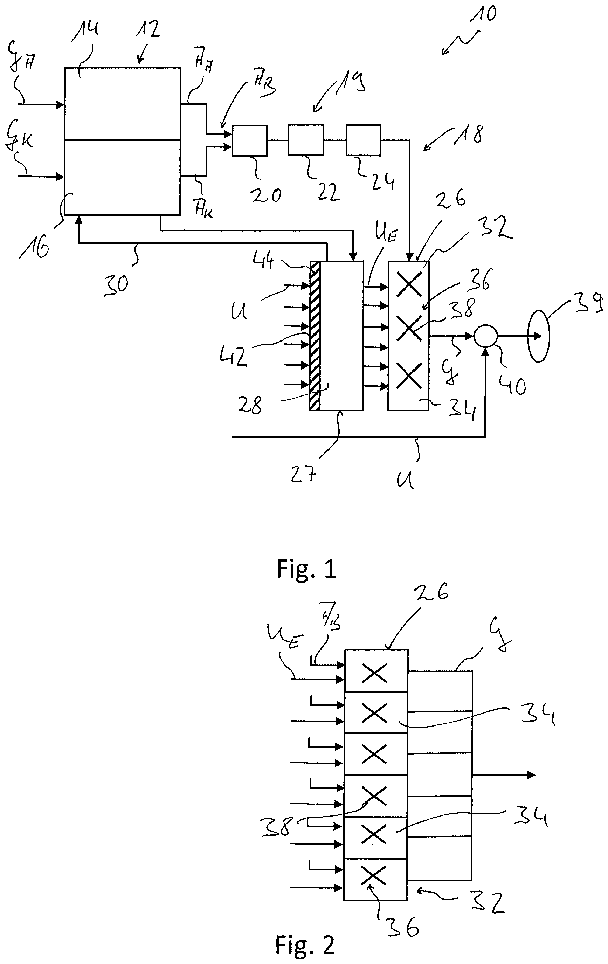

Die Fig. 1 zeigt ein allgemein mit 10 bezeichnetes Brennstoffzellensystem, das beispielsweise in einem Fahrzeug zur Bereitstellung elektrischer Energie eingesetzt werden kann. Das Brennstoffzellensystem 10 umfasst eine Brennstoffzellenanordnung 12, die beispielsweise mit einem oder mehreren Brennstoffzellenstapeln aufgebaut sein kann und grundsätzlich einen mit Wasserstoff enthaltendem Anodengas G_{A} gespeisten Anodenbereich 14 und einen mit Sauerstoff enthaltendem Kathodengas G_{K} gespeisten Kathodenbereich 16 umfasst. Im Brennstoffzellenprozess wird unter Umsetzung des Anodengases G_{A} und des Kathodengases G_{K} einerseits elektrische Energie erzeugt und andererseits ein im Allgemeinen Restwasserstoff enthaltendes Anodenabgas A_{A} und ein im Allgemeinen Restsauerstoff enthaltendes Kathodenabgas A_{K} erzeugt. Abhängig vom Brennstoffzellentyp enthält primär das Anodenabgas A_{A} oder das Kathodenabgas A_{K} einen vergleichsweise hohen Anteil an Wasser bzw. Wasserdampf mit einer relativen Feuchte im Bereich von bis zu 90 bis 100%.

Der Brennstoffzellenanordnung 12 ist eine allgemein mit 18 bezeichnete Brennstoffzellenabgasanlage zugeordnet. Im dargestellten Beispiel nimmt die Brennstoffzellenabgasanlage 18 das Anodenabgas A_{A} und das Kathodenabgas A_{K} als Brennstoffzellenabgas A_{B} auf. Alternativ könnte die Abgasanlage 18 so aufgebaut sein, dass sie nur denjenigen der beiden die Brennstoffzellenanordnung 12 verlassenden Abgasströme aufnimmt, welcher stark bzw. stärker mit Wasser bzw. Wasserdampf angereichert ist.

In einem stromaufwärtigen Bereich der Brennstoffzellenabgasanlage 18 kann eine Brennstoffzellenabgas-Behandlungsanordnung 19 vorgesehen sein. Die Brennstoffzellenabgas-Behandlungsanordnung 19 kann beispielsweise einen Flüssigkeitsabscheider 20 umfassen, in welchem im Brennstoffzellenabgas A_{B} enthaltene, beispielsweise größere Flüssigkeitsansammlungen bzw. Flüssigkeitströpfchen ausgeschieden werden können und beispielsweise dem Brennstoffzellenprozess zugeführt werden können. Die Brennstoffzellenabgas-Behandlungsanordnung 19 kann zur Nachbehandlung des Brennstoffzellenabgases A_{B} einen Katalysator 22 umfassen und kann beispielsweise einen Schalldämpfer 24 aufweisen.

Es ist darauf hinzuweisen, dass andere oder zusätzliche Baugruppen der Brennstoffzellenabgas-Behandlungsanordnung 19 vorgesehen sein können oder einzelne der drei dargestellten Baugruppen der Brennstoffzellenabgas-Behandlungsanordnung 19 in der Brennstoffzellenabgasanlage 18 nicht vorhanden sein können oder in anderer Reihenfolge positioniert sein können.

Die Brennstoffzellenabgasanlage 18 umfasst ferner eine Brennstoffzellenabgas/Umgebungsluft-Mischanordnung 26. Dieser wird das ggf. in einer oder mehreren der Baugruppen der Brennstoffzellenabgas-Behandlungsanordnung 19 behandelte Brennstoffzellenabgas A_{B} zugeführt. In der Brennstoffzellenabgas/Umgebungsluft-Mischanordnung 26 wird das Brennstoffzellenabgas A_{B} mit erwärmter Umgebungsluft Uε gemischt. Hierzu wird aus der Umgebung aufgenommene Umgebungsluft U in einer Umgebungsluft-Heizanordnung 27 erwärmt. Die Umgebungsluft-Heizanordnung 27 kann beispielsweise einen Wärmetauscher 28 umfassen, welcher von einem in einem Brennstoffzellen-Kühlkreislauf 30 zirkulierenden Brennstoffzellen-Kühlmedium, im Allgemeinen einem flüssigen Kühlmedium, durchströmt wird. Beispielsweise kann der Wärmetauscher 28 durch einen in einem Fahrzeug vorhandenen und vom Fahrtwind durchströmbaren Fahrzeugkühler bereitgestellt sein.

In dem Wärmetauscher 28 nimmt die von außen aufgenommene Umgebungsluft U Wärme von dem Brennstoffzellen-Kühlmedium auf und strömt dann als erwärmte Umgebungsluft U_{E} zu der Brennstoffzellenabgas/Umgebungsluft-Mischanordnung 26. Diese weist ein Mischvolumen 32 auf, welches in dem in Fig. 1 dargestellten Beispiel durch eine einzige in der Brennstoffzellenabgas/Umgebungsluft-Mischanordnung 26 bereitgestellte Mischkammer 34 gebildet sein kann. In diese Mischkammer 34 werden das Brennstoffzellenabgas A_{B} und die erwärmte Umgebungsluft U_{E} eingeleitet.

In dem Mischvolumen 32 bzw. der dieses bereitstellenden Mischkammer 34 ist eine Brennstoffzellenabgas/Umgebungsluft-Mischanordnung 36 vorgesehen. Diese kann einen oder mehrere Mischer 38 umfassen, welche beispielsweise mit für Verwirbelungen bzw. eine Strömungsumlenkung sorgenden Ablenkschaufeln ausgebildet sein können und dadurch eine effiziente Durchmischung des Brennstoffzellenabgases A_{B} mit der erwärmten Umgebungsluft U_{E} bewirken und dabei ein die Brennstoffzellenabgas/Umgebungsluft-Mischanordnung 26 verlassendes Brennstoffzellenabgas/Umgebungsluft-Gemisch G erzeugen. Dieses Brennstoffzellenabgas/Umgebungsluft-Gemisch G kann an einem stromabwärtigen Endbereich der Brennstoffzellenabgasanlage 18 über eine prinzipartig dargestellte Austrittsöffnung 39 zur Umgebung abgegeben werden.

Durch das Mischen des eine hohe relative Feuchte aufweisenden Brennstoffzellenabgases A_{B} mit der eine vergleichsweise geringe relative Feuchte aufweisenden erwärmten Umgebungsluft U_{E} wird das Brennstoffzellenabgas/Umgebungsluft-Gemisch G mit einer relativen Feuchte bereitgestellt, die deutlich geringer ist als die relative Feuchte des Brennstoffzellenabgases A_{B} und einen Wert von weit unter 100% aufweist. Tritt da Brennstoffzellenabgas/Umgebungsluft-Gemisch G mit seiner deutlich unter einem Wert von 100% liegenden relativen Feuchte aus der Brennstoffzellenabgasanlage 18 zur Umgebung aus, kommt dieses bei einem Betrieb bei vergleichsweise niedriger Umgebungstemperatur spontan in Kontakt mit der kalten Umgebungsluft U. Dies führt dazu, dass durch die Vermischung des Brennstoffzellenabgas/Umgebungsluft-Gemisches G mit der vergleichsweise kalten Umgebungsluft U auch die Temperatur spontan abnimmt. Da die relative Feuchte des Brennstoffzellenabgas/Umgebungsluft-Gemisches G vor dieser Durchmischung mit der Umgebungsluft U deutlich unter 100% liegt, besteht die Möglichkeit, dass beim Absinken der Temperatur des Gemisches G bei der Durchmischung mit der kalten Umgebungsluft U die relative Feuchte den Wert von 100% übersteigt und damit eine Nebelbildung durch auskondensierendes Wasser entsteht, praktisch nicht.

Um die Gefahr der Nebelbildung bei Abgabe des Brennstoffzellenabgas/Umgebungsluft-Gemisches G nach außen weiter zu mindern, kann dem Brennstoffzellenabgas/Umgebungsluft-Gemisch G vor seiner Abgabe aus der Brennstoffzellenabgasanlage nicht erwärmte Umgebungsluft U bei im Bereich einer Umgebungsluft-Beimischanordnung 40 beigemischt werden. Die Umgebungsluft-Beimischanordnung kann ein Ventilsystem bzw. ein Klappensystem umfassen, durch welches beispielsweise auch ein durch den Fahrtwind generierter Strom von Umgebungsluft U in das Brennstoffzellenabgas/Umgebungsluft-Gemisch G eingeleitet wird und auf diese Art und Weise die Temperatur des Brennstoffzellenabgas/Umgebungsluft-Gemisches G bereits etwas gesenkt wird, wobei die relative Feuchte des bereits in der Brennstoffzellenabgasanlage 18 mit nicht erwärmter Umgebungsluft U durchmischten Brennstoffzellenabgas/Umgebungsluft-Gemisches G immer noch deutlich unter 100% liegt. Grundsätzlich kann eine derartige Durchmischung auch unmittelbar an der Austrittsöffnung 39 der Brennstoffzellenabgasanlage 18 erzeugt werden.

Um die thermische Wechselwirkung der in den Wärmetauscher 28 eingeleiteten nicht erwärmten Umgebungsluft U mit dem Brennstoffzellen-Kühlmedium definiert einstellen zu können, kann dem Wärmetauscher 28 eine Strömungsdrosselanordnung 42 zugeordnet sein. Diese kann beispielsweise stromaufwärts des Wärmetauschers 28 eine Mehrzahl von zum Verändern der Durchströmbarkeit verstellbaren Lamellen 44 umfassen. Durch Verschwenken der Lamellen 44 und damit verändern der Durchströmbarkeit der Strömungsdrosselanordnung 42 wird die Menge der dem Wärmetauscher 28 durchströmenden Umgebungsluft U verändert. Wird weniger Umgebungsluft U in dem Wärmetauscher 28 eingeleitet, wird die im Brennstoffzellen-Kühlmedium transportierte Wärme auf eine geringere Luftmenge übertragen, was zur Folge haben kann, dass die den Wärmetauscher 28 erwärmt verlassende Umgebungsluft U_{E} eine höhere Temperatur aufweist. Somit kann durch Regulierung der den Wärmetauscher 28 durchströmenden Luftmenge einerseits und damit der Temperatur der den Wärmetauscher 28 verlassenden erwärmten Umgebungsluft U_{E} andererseits auf Änderungen der relativen Luftfeuchte des Brennstoffzellenabgases A_{B} reagiert werden, um somit im Bereich der Brennstoffzellenabgas/Umgebungsluft-Mischanordnung ein Brennstoffzellenabgas/Umgebungsluft-Gemisch G mit minimal möglicher relativer Feuchte erzeugen zu können.

Um die von der Umgebungsluft-Heizanordnung 27 abgegebene erwärmte Umgebungsluft Uε effizient mit dem Brennstoffzellenabgas A_{B} durchmischen zu können, können weiter verschiedene Maßnahmen ergriffen werden. So kann, wie dies in Fig. 1 veranschaulicht ist, die erwärmte Umgebungsluft U_{E} über eine größere Fläche bzw. eine Mehrzahl von Eintrittsöffnungen verteilt in die Mischkammer 34 eingeleitet werden. Durch diese flächig verteilte Einleitung der erwärmten Umgebungsluft Uε in die Mischkammer 34 wird im Vergleich zu einer grundsätzlich auch möglichen Einleitung an einer Eintrittsöffnung eine über das gesamte Mischvolumen 36 gleichmäßigere bzw. kleinräumiger verteilte Vermischung der erwärmten Umgebungsluft Uε mit dem Brennstoffzellenabgas A_{B} erreicht. Alternativ oder zusätzlich kann auch das Brennstoffzellenabgas A_{B} über eine Mehrzahl von Eintrittsöffnungen in die Mischkammer 34 eingeleitet werden, um somit eine gleichmäßigere Verteilung und damit eine bessere Vermischung mit der erwärmten Umgebungsluft U_{E} zu erreichen.

In einer in Fig. 2 veranschaulichten weiteren Ausgestaltungsvariante kann das Mischvolumen 32 in eine Mehrzahl von grundsätzlich voneinander getrennten Mischkammern 34 unterteilt sein. In Zuordnung zu jeder der Mischkammern 34 kann die Brennstoffzellenabgas/Umgebungsluft-Mischanordnung 36 jeweils einen Mischer 38 umfassen.

Jeder Mischkammer 34 wird ein Teil des von der Brennstoffzellenanordnung 12 abgegebenen Brennstoffzellenabgases A_{B} sowie ein Teil der vom Wärmetauscher 28 abgegebenen erwärmten Umgebungsluft U_{E} zugeführt und in jeder Mischkammer 34 werden somit kleinere Volumenströme des Brennstoffzellenabgases A_{B} und der erwärmten Umgebungsluft Uε durch zumindest einen darin vorgesehenen Mischer 38 effizient gemischt. Die Einleitung des Brennstoffzellenabgases A_{B} und der erwärmten Umgebungsluft Uε in die einzelnen Mischkammern 34 kann jeweils über eine einzige oder eine Mehrzahl von Eintrittsöffnungen erfolgen. In jeder der Mischkammern 34 wird somit ein Gemisch G aus Brennstoffzellenabgas und Umgebungsluft erzeugt. Die aus den Mischkammern 34 abgegebenen Volumenströme des Brennstoffzellenabgas/Umgebungsluft-Gemisches G können dann zusammengeführt und in der mit Bezug auf die Fig. 1 beschriebenen Art und Weise zur Umgebung abgegeben werden. Dabei kann auch vorgesehen sein, dass die aus den einzelnen Mischkammern 34 austretenden Volumenströme des Brennstoffzellenabgas/Umgebungsluft-Gemisches G separat jeweils zur Umgebung abgegeben werden und sich mit der nicht erwärmten Umgebungsluft vermischen. Auch bei der in Fig. 1 dargestellten Ausgestaltungsvariante könnten beispielsweise über eine Mehrzahl von Abgabeöffnungen oder Abgaberohre voneinander getrennte Teilströme des Brennstoffzellenabgas/Umgebungsluft-Gemisches G zur Umgebung abgegeben werden.

Zur effizienten Erwärmung der Umgebungsluft kann die Umgebungsluft-Heizanordnung 27 beispielsweise zusätzlich zu der Möglichkeit, die Umgebungsluft durch thermische Wechselwirkung mit dem Brennstoffzellen-Kühlmedium zu erwärmen, eine elektrisch betriebene Heizeinrichtung umfassen. Diese kann insbesondere in einer Startphase des Betriebs, in welcher das Brennstoffzellen-Kühlmedium eine vergleichsweise niedrige Temperatur aufweist, mit durch die Brennstoffzellenanordnung 12 generierter elektrischer Energie betrieben werden, um auch in einer Startphase des Betriebs des Brennstoffzellensystems 10 eine Nebelbildung beim Austritt von Brennstoffzellenabgas A_{B} in die Umgebung effizient zu unterbinden.

## Patentansprüche

1. Brennstoffzellenabgasanlage, insbesondere zur Bereitstellung elektrischer Energie in einem Fahrzeug, umfassend:
- eine Brennstoffzellenabgas/Umgebungsluft-Mischanordnung (26) zur Aufnahme von von einer Brennstoffzellenanordnung (12) abgegebenem Brennstoffzellenabgas (A_{B}) und von erwärmter Umgebungsluft (Uε) und zur Abgabe eines Brennstoffzellenabgas/Umgebungsluft-Gemisches (G),
- eine Umgebungsluft-Heizanordnung (27) zur Erwärmung der der Brennstoffzellenabgas/Umgebungsluft-Mischanordnung (26) zur Durchmischung mit dem Brennstoffzellenabgas (A_{B}) zuzuführenden Umgebungsluft (U).

2. Brennstoffzellenabgasanlage nach Anspruch 1, **dadurch gekennzeichnet, dass** die Umgebungsluft-Heizanordnung (27) einen von der Brennstoffzellenabgas/Umgebungsluft-Mischanordnung (26) zuzuführender Umgebungsluft (U) und einem in einem Brennstoffzellen-Kühlkreislauf (30) strömenden Brennstoffzellen-Kühlmedium durchströmbaren Wärmetauscher (28) zur Übertragung von in dem Brennstoffzellen-Kühlmedium enthaltener Wärme auf die der Brennstoffzellenabgas/Umgebungsluft-Mischanordnung (26) zuzuführende Umgebungsluft (U) umfasst,
vorzugsweise wobei
der Umgebungsluft-Heizanordnung (27) eine Strömungsdrosselanordnung (42) zur Drosselung der durch die Umgebungsluft-Heizanordnung (27) hindurchströmenden Menge der der Brennstoffzellenabgas/Umgebungsluft-Mischanordnung (26) zuzuführenden Umgebungsluft (U) zugeordnet ist.

3. Brennstoffzellenabgasanlage nach einem der Ansprüche 1 oder 2, **dadurch gekennzeichnet, dass** die Brennstoffzellenabgas/Umgebungsluft-Mischanordnung (26) ein die von der Umgebungsluft-Heizanordnung (27) abgegebene Umgebungsluft (U_{E}) und das Brennstoffzellenabgas (A_{B}) aufnehmendes Mischvolumen (32) umfasst,
vorzugsweise wobei
dem Mischvolumen (32) eine Brennstoffzellenabgas/Umgebungsluft-Mischanordnung (36) zum Vermischen der in das Mischvolumen (32) eingeleiteten Umgebungsluft (Uε) mit dem in das Mischvolumen (32) eingeleiteten Brennstoffzellenabgas (A_{B}) zugeordnet ist.

4. Brennstoffzellenabgasanlage nach Anspruch 3, **dadurch gekennzeichnet, dass** das Mischvolumen (32) eine das Brennstoffzellenabgas (A_{B}) und die von der Umgebungsluft-Heizanordnung (27) abgegebene Umgebungsluft (Uε) aufnehmende Mischkammer (34) umfasst,
vorzugsweise wobei
die Mischkammer (34) eine Mehrzahl von Umgebungsluft-Eintrittsöffnungen zum Einleiten von Umgebungsluft (Uε) in die Mischkammer (34) oder/und eine Mehrzahl von Brennstoffzellenabgas-Eintrittsöffnungen zum Einleiten von Brennstoffzellenabgas (A_{B}) in die Mischkammer (34) umfasst.

5. Brennstoffzellenabgasanlage nach Anspruch 3 und Anspruch 4, **dadurch gekennzeichnet, dass** die Umgebungsluft/Brennstoffzellenabgas-Mischanordnung (36) in Zuordnung zu der Mischkammer (34) wenigstens einen Mischer (38) umfasst.

6. Brennstoffzellenabgasanlage nach Anspruch 3 oder 4, **dadurch gekennzeichnet, dass** das Mischvolumen (32) eine Mehrzahl von Mischkammern (34) umfasst, wobei jede Mischkammer (34) zur Aufnahme eines Teils des Brennstoffzellenabgases (A_{B}) und eines Teils der von der Umgebungsluft-Heizanordnung (27) abgegebenen Umgebungsluft (U_{E}) vorgesehen ist.

7. Brennstoffzellenabgasanlage nach Anspruch 3 und Anspruch 6, **dadurch gekennzeichnet, dass** die Brennstoffzellenabgas/Umgebungsluft-Mischanordnung (36) in Zuordnung zu jeder Mischkammer (34) wenigstens einen Mischer (38) umfasst.

8. Brennstoffzellenabgasanlage nach einem der Ansprüche 1-7, **dadurch gekennzeichnet, dass** eine Umgebungsluft-Beimischanordnung (40) vorgesehen ist zum Beimischen von Umgebungsluft (U) zu dem von der Brennstoffzellenabgas/Umgebungsluft-Mischanordnung (26) abgegebenen Brennstoffzellenabgas/Umgebungsluft-Gemisch (G).

9. Brennstoffzellenabgasanlage nach einem der Ansprüche 1-8, **dadurch gekennzeichnet, dass** stromaufwärts der Brennstoffzellenabgas/Umgebungsluft-Mischanordnung (26) eine Brennstoffzellenabgas-Behandlungsanordnung (19) vorgesehen ist, wobei die Brennstoffzellenabgas-Behandlungsanordnung wenigstens eine der folgenden Baugruppen umfasst:
- Flüssigkeitsabscheider (20),
- Katalysator (22),
- Schalldämpfer (24).

10. Brennstoffzellensystem, umfassend eine Brennstoffzellenanordnung und eine Brennstoffzellenabgasanlage (18) nach einem der Ansprüche 1-9.

11. Verfahren zum Betreiben eines Brennstoffzellensystems, vorzugsweise nach Anspruch 10, bei welchem Verfahren ein Gemisch (G) aus von einer Brennstoffzellenanordnung (12) des Brennstoffzellensystems (10) abgegebenem Brennstoffzellenabgas (A_{B}) und Umgebungsluft (U) erzeugt wird, wobei wenigstens ein Teil der dem Brennstoffzellenabgas (A_{B}) beigemischten Umgebungsluft (U) vor Vermischung mit dem Brennstoffzellenabgas (A_{B}) erwärmt wird.

12. Verfahren nach Anspruch 11, **dadurch gekennzeichnet, dass** dem Gemisch (G) aus Brennstoffzellenabgas (A_{B}) und erwärmter Umgebungsluft nicht erwärmte Umgebungsluft (U) beigemischt wird.

13. Verfahren nach Anspruch 11 oder 12, **dadurch gekennzeichnet, dass** die erwärmt mit dem Brennstoffzellenabgas (A_{B}) zu mischende Umgebungsluft (U) in einem Wärmetauscher (28) durch thermische Wechselwirkung mit einem in einem Brennstoffzellen-Kühlkreislauf (30) strömenden Brennstoffzellen-Kühlmedium erwärmt wird.

14. Verfahren nach Anspruch 13, **dadurch gekennzeichnet, dass** zur Einstellung einer Temperatur der in dem Wärmetauscher (28) zu erwärmenden Umgebungsluft (U) ein Massenstrom der den Wärmetauscher (28) durchströmenden Umgebungsluft (U) oder/und ein Massenstrom des den Wärmetauscher (28) durchströmenden Brennstoffzellen-Kühlmediums verändert wird.

15. Verfahren nach einem der Ansprüche 11-14, **dadurch gekennzeichnet, dass** das Brennstoffzellenabgas (A_{B}) mit der erwärmten Umgebungsluft (U_{E}) in wenigstens einer wenigstens einen Teil des Brennstoffzellenabgases (A_{B}) und wenigstens einen Teil der erwärmten Umgebungsluft (U_{E}) aufnehmenden Mischkammer (34) gemischt wird.
